(19) Europäisches Patentamt
European Patent Office
Office européen des brevets

(11) Veröffentlichungsnummer: **0 030 664**
**B1**

(12) # EUROPÄISCHE PATENTSCHRIFT

(45) Veröffentlichungstag der Patentschrift: **02.01.85**

(51) Int. Cl.³: **C 08 F 14/26**, C 08 F 259/08 // (C08F259/08, 214/26)

(21) Anmeldenummer: **80107445.1**

(22) Anmeldetag: **28.11.80**

(54) **Rieselfähige Sinterpulver mit verbesserten Eigenschaften auf Basis von Tetrafluorethylen-Polymeren und Verfahren zu deren Herstellung.**

(30) Priorität: **12.12.79 DE 2949908**

(43) Veröffentlichungstag der Anmeldung: **24.06.81 Patentblatt 81/25**

(45) Bekanntmachung des Hinweises auf die Patenterteilung: **02.01.85 Patentblatt 85/1**

(84) Benannte Vertragsstaaten: **BE DE FR GB IT NL SE**

(56) Entgegenhaltungen:
**EP - A - 0 001 420**
**DE - A - 1 520 544**
**DE - A - 1 544 624**
**DE - A - 1 745 907**
**FR - A - 1 560 569**
**FR - A - 2 153 488**
**US - A - 4 038 230**

**CHEMICAL ABSTRACTS, Band 84, Nr. 6, 9. Februar 1976, Seite 33, Nr. 31935x Columbus, Ohio, U.S.A.**

**Die Akte enthält technische Angaben, die nach dem Eingang der Anmeldung eingereicht wurden und die nicht in dieser Patentschrift enthalten sind.**

(73) Patentinhaber: **HOECHST AKTIENGESELLSCHAFT, Postfach 80 03 20, D-6230 Frankfurt am Main 80 (DE)**

(72) Erfinder: **Kuhls, Jürgen, Dr., Unghausen 16a, D-8263 Burghausen/Salzach (DE)**
Erfinder: **Hartwimmer, Robert, Dr., Della-Croce-Strasse 10a, D-8263 Burghausen/Salzach (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 030 664 B1

BUNDESDRUCKEREI BERLIN

## Beschreibung

Die Erfindung betrifft rieselfähige Sinterpulver auf Basis mindestens 98,5 Gew.-% polymerisierte Tetrafluorethylen-Einheiten enthaltender Polymerer und ein Verfahren zu deren Herstellung, wobei eine in Gegenwart einer oberflächenaktiven Verbindung in wäßrigem Medium hergestellte kolloidale Polymerisatdispersion, gegebenenfalls unter Zugabe einer gut wasserlöslichen, dissoziierenden anorganischen Verbindung, bis zu einer ausreichenden Verdickung, angezeigt durch Auftreten deutlich sichtbarer optischer Inhomogenitäten, gerührt, dann eine organische Flüssigkeit, die die in der Dispersion befindlichen Polymerisatteilchen gut benetzt, zugegeben und nach einer Zeit das gebildete Polymergranulat gewaschen, vom wäßrigen Medium getrennt und getrocknet wird.

Aus der US-PS 2 593 583 ist ein Verfahren zur Herstellung von rieselfähigen, granulierten Tetrafluorethylen-Polymeren bekannt, bei dem eine in wäßrigem Medium unter Zusatz von Emulgatoren hergestellte kolloidale Polymerisatdispersion bei 0 bis 85°C mit einer Energie von ca. 4 bis 200 $Js^{-1}l^{-1}$ ohne Zusatz irgendwelcher Hilfsmittel ausgerührt wird. Zusätze von Elektrolyten oder organischen Fällungsmitteln, beispielsweise Aceton oder Methanol, werden als nachteilig beschrieben.

In der CA-PS 566 352 wird ein Formpulver beschrieben, das eine Mischung von 80 bis 98 Gew.-% (bezogen auf die Mischung) Carbonyleisenpartikel und 20 bis 2 Gew.-% Tetrafluorethylen-Polymerpartikel mit einer durchschnittlichen Teilchengröße von 0,25 bis 0,5 µm enthält. Die Eisenpartikel sind im wesentlichen gleichmäßig beschichtet mit dem Polymeren und können unter Druck zu selbsttragenden Artikeln extrudiert werden. Hergestellt werden die Formpulver, indem die Eisenteilchen und Wasser unter Rühren zur Dispersion gegeben werden, bis der gewünschte hohe Gehalt an Eisenteilchen erreicht ist und eine sirupöse Flüssigkeit vorliegt, die anschließend kräftig gerührt oder in einer Kugelmühle gemahlen wird, bis eine teigartige Masse entsteht. Irgendwelche weiteren Zusätze erfolgen nicht.

Ferner ist aus US-PS 3 046 263 ein Verfahren zur kontinuierlichen Koagulation von wäßrigen, kolloidalen Dispersionen von Tetrafluorethylen-Polymeren, die einen kleinen Anteil an Dispergiermittel enthalten, bekannt, bei dem die Dispersion wiederum ohne weitere Zusätze kurzzeitig, beispielsweise in einer Zentrifugalpumpe mit einer Energie von ca. 200 bis 20 000 $Js^{-1}l^{-1}$ unter Ausschluß von Luft durchmischt, dann durch ein Kapillarrohr, das einen Druckabfall um 3,4 bis 138 kPa bewirkt, geleitet und danach in Gegenwart von Luft mit einer Energie von 49 bis 9850 $Js^{-1}l^{-1}$ gerührt, abgeschieden und getrocknet wird.

Aus GB-PS 917 223 ist ein Verfahren zur Herstellung eines formbaren Materials für Lager bekannt, wobei ein oder mehrere Füllstoffe in feinverteilter Form mit der polytetrafluorethylenhaltigen Dispersion innig durchmischt, die Dispersion koaguliert, das Koagulationsprodukt getrocknet, unter Druck zu einer selbsttragenden festen Masse verdichtet und anschließend gemahlen wird. Zur Koagulation wird vorzugsweise Aluminiumnitrat oder ein anderes Koagulationsmittel der Mischung aus dem Füllstoff und der Polytetrafluorethylen-Dispersion zugesetzt. Weitere Zusatzmittel werden nicht verwendet.

In der DE-AS 1 520 544 werden Polytetrafluorethylen-Formpulver mit einer Gesamtoberfläche von mindestens 3 und weniger als 9 $m^2/g$, einem Formbarkeitsindex von weniger als 50 und einem Schüttgewicht (scheinbare Dichte) von 420 bis 685 g/l beschrieben, die vorzugsweise ein spezifisches Gewicht von weniger als 2,2 besitzen. Hergestellt werden die Formpulver durch ein bestimmtes Polymerisationsverfahren, bei dem zu Beginn Tetrafluorethylen in einem wäßrigen Medium bei einer Temperatur von 60 bis 130°C und einem Druck von 10 bis 50 atü polymerisiert wird, wobei das wäßrige Medium mit einer Leistungsaufnahme im Bereich von 4 bis 20 $Js^{-1}l^{-1}$ bei einem Verhältnis von Leistung zu Durchflußkoeffizienten von mindestens 1,4 gerührt wird und sich mindestens $5 \cdot 10^{10}$ Keime mit einer Gesamtoberfläche von mehr als 9 $m^2/g$ je ml bilden, wonach die Polymerisation unter Teilchenvergrößerung durchgeführt wird, bis die Teilchen eine Gesamtoberfläche von weniger als 9 bis 3 $m^2/g$ haben. Die Feststoffe werden von der so entstandenen Aufschlämmung abfiltriert in Wasser dispergiert, kurzzeitig mit einem schnellumlaufenden Flügelrührer geschnitten und dann für eine längere Zeit gerade so viel gerührt, daß die nicht wasserfeuchten Teilchen untergetaucht bleiben, worauf die Feststoffe abfiltriert und getrocknet werden. Organische Flüssigkeiten, die die Teilchen benetzen, werden nicht zugegeben.

Aus DE-AS 1 745 907 ist ein Verfahren bekannt, ein trockenes, überwiegend Polytetrafluorethylen enthaltendes Pulver durch Rühren bei Temperaturen von 0 bis 100°C in einer wäßrigen Emulsion, die 5 bis 50 Gew.-% organische Flüssigkeiten wie Benzin, Benzol, Amylacetat, n-Butanol, Diisopropylether, Chloroform oder Chlorbenzol enthält, zu granulieren, so daß Preß-Sinter-Pulver mit hohem Schüttgewicht von bis zu über 600 g/l entstehen. Mit einem Ausgangsmaterial von einem Korndurchmesser von 0,05 µm wird beispielsweise ein aufbereitetes Material mit einem Schüttgewicht von 660 g/l gewonnen.

Die US-PS 39 80 612 beschreibt ein ähnliches Verfahren, bei dem ein Pulvergemisch aus einem Tetrafluorethylen-Polymeren mit einer Teilchengröße von 5 bis 200 µm, das 5 bis 40 Vol.-% eines metallhaltigen Füllstoffes enthält, in einer Zweiphasen-Flüssigkeit, die Wasser und eine organische Flüssigkeit enthält, unter Zusatz einer wäßrigen Dispersion eines Tetrafluorethylen-Polymerisates, die durch Polymerisation in Gegenwart eines Emulgators hergestellt wurde, durch Rühren granuliert wird. Das trockene Tetrafluorethylen-Polymerpulver wird durch Suspensionspolymerisation und nachfolgen-

des Mahlen hergestellt. Nach den Beispielen enthält die Granulierungsmischung etwa die 5- bis 50-fache Menge trockenen Polymerisates gegenüber dem als wäßrige Dispersion zugesetzten Polymerisat.

Weiterhin ist aus DE-AS 2 523 570 ein Polymerisationsverfahren bekannt, bei dem mit einem bestimmten Initiatorsystem, unter anderem auch in Gegenwart eines Emulgators Polymerisate erhalten werden, die sich nach der Preß-Sintertechnik verarbeiten lassen, ohne die sonst bei Emulsionspolymerisaten beobachtete unerwünschte Rißbildung der Sinterblöcke zu zeigen. Nach den Beispielen 13 bis 20 wird die durch Emulsionspolymerisation erhaltene Dispersion durch Zugabe von Wasser auf 10 Gew.-% Feststoffgehalt, bezogen auf die Flotte, verdünnt und bei 22 bis 25°C mit einem Rührer, bei dem 4 vierblättrige Rührorgane gegeneinander versetzt über die Welle verteilt angeordnet sind, ausgerührt, zweimal gewaschen und getrocknet. Über die Anwendung irgendwelcher Zusatzstoffe beim Ausrühren der wäßrigen Dispersion ist nichts ausgesagt.

Die bekannten Verfahren und die danach hergestellten Polymerisate beziehungsweise Formpulver weisen mindestens einen oder mehrere folgender Nachteile auf:

niedrigeres Schüttgewicht, schlechtere Rieselfähigkeit, ungünstigere Kornstabilität,
geringere spezifische Oberfläche, höheres spezifisches Gewicht,
ungünstigeren Formbarkeitsindex, wesentlich höhere Deformation unter Last oder
geringere Kugeldruckhärte.

Es sind nur getrocknete, feinstgemahlene Polymerisatpulver einsetzbar. Trotz Feinstmahlung ergeben die erzeugten Granulate Formkörper, deren mechanische und/oder elektrische Werte zu wünschen übrig lassen.

Das tetrafluorethylenhaltige Polymere und der zugegebene Füllstoff zeigen Tendenz zur Entmischung.

Es ist eine besondere Vorbehandlung des Füllstoffs notwendig. Das erzeugte Produkt ist für die Verarbeitung im Preß-Sinter-Verfahren weniger geeignet wegen mangelnder Thermostabilität und Rißbildung bei den daraus erzeugten gesinterten Formteilen.

Zur Herstellung ist eine relativ aufwendige Apparatur notwendig, das Verfahren ist störanfällig wegen Verstopfung von Apparateteilen.

Zur Herstellung der Formpulver ist zwischendurch eine Trocknung sowie gegebenenfalls eine Verdichtung unter Druck mit anschließender Mahlung erforderlich.

Es wurden nun sinterfähige Polymerpulver und ein Verfahren zu deren Herstellung gefunden, die die Nachteile der bekannten Pulver und der Verfahren zu deren Herstellung nicht aufweisen. Es handelt sich um ein sinterfähiges Polymerpulver, bestehend aus Primärteilchen mit einer mittleren Teilchengröße von 0,05 bis 0,8 μm, die zu einem Granulat mit einem mittleren Korndurchmesser von 150 bis 850 μm agglomeriert sind, wobei das zugrundeliegende Polymere 98,5 bis 100 Gew.-% polymerisierte Tetrafluorethylen-Einheiten und 1,5 bis 0 Gew.-% polymerisierte Einheiten mindestens eines perfluorierten Monomeren, in dem ein Fluor-Atom durch Clor ersetzt sein kann, und das mit Tetrafluorethylen copolymerisierbar ist enthält, gekennzeichnet durch eine Kombination folgender Eigenschaften:

spezifische Oberfläche 5 bis 11 $m^2/g$;
standardisiertes spezifisches Gewicht kleiner als 2,2;
Rieselfähigkeit kleiner als 3,1 s/25 g;
Schüttgewicht 750 bis 860 g/l;
Kornstabilität 2,7 bis 5 s/50 g;
Formbarkeitsindex weniger als 11 und
Deformation unter Last weniger als 14%.

Es handelt sich ferner um ein füllstoffhaltiges, sinterfähiges Polymerpulver, bestehend aus Primärteilchen mit einer mittleren Teilchengröße von 0,05 bis 0,8 μm, die zu einem Granulat mit einem mittleren Korndurchmesser von 500 bis 700 μm agglomeriert sind, wobei dieser mittlere Korndurchmesser der Agglomerate mindestens 35% größer als der mittlere Durchmesser der Füllstoffteilchen sein soll, zusammengesetzt aus 95 bis 60 Vol.-% eines Polymeren, das 98,5 bis 100 Gew.-% polymerisierte Tetrafluorethyen-Einheiten und 1,5 bis 0 Gew.-% polymerisierte Einheiten mindestens eines Monomeren, in dem ein Fluor-Atom durch Chlor ersetzt sein kann, und das mit Tetrafluorethylen copolymerisierbar ist, enthält, sowie 5 bis 40 Vol.-% eines Füllstoffs, bestehend aus mindestens einem Metall; Metalloxid; Metallsilikat; Metallsulfat oder aus Kohlenstoff mit einer Teilchengröße, die höchstens 90% der Teilchengröße des sinterfähigen Polymerpulvers beträgt, und einem Schmelzpunkt von mindestens 380°C, wobei sich alle Volumenprozent-Angaben auf das füllstoffhaltige Polymerpulver und alle Gewichtsprozent-Angaben auf das Polymerpulver ohne Füllstoff beziehen, gekennzeichnet durch eine Kombination folgender Eigenschaften:

spezifische Oberfläche 1,5 bis 8 $m^2/g$;
Rieselfähigkeit kleiner als 3,1 s/25 g;
Schüttgewicht von 550 bis 1400 g/l;

Kornstabilität 1 bis 3,5 s/50 g;
Deformation unter Last weniger 8% und
Kugeldruckhärte größer als 30 $N/mm^2$.

Unter »sinterfähige Polymerpulver« im Sinne der vorliegenden Erfindung sollen solche Polymerpulver verstanden werden, die eine Schmelzviskosität (Scherviskosität) bei 350°C von $\geqq$0,1 GPa · s, häufig von $\geqq$1 GPa · s, bis hinauf zu etwa 900 GPa · s aufweisen. Solche Polymerpulver sind aus der Schmelze nach üblichen Verarbeitungsmethoden für Thermoplasten nicht verarbeitbar. Die Schmelzviskosität (Scherviskosität) wird gemessen nach der Methode (Kriechtest) von Ajroldi et al., beschrieben in J. appl. Polym. Sci., 14, 1970, Seite 79 ff. Die Methode ist genauer beschrieben in US-PS 4 036 802, Spalte 9, Zeile 46 bis Spalte 10, Zeile 41. Bei den Messungen innerhalb dieser Anmeldung wurde sie wie folgt abgeändert: Dehnungsmessung bei 350°C, Prüfkörper mit 0,25 cm Breite, 0,65 cm Dicke und 3,5 cm gemessener Länge bei der Dehnung. Das sinterfähige Polymerpulver besteht vorzugsweise aus Primärteilchen einer mittleren Teilchengröße von 0,2 bis 0,5 µm, die zu einem Granulat mit einem mittleren Korndurchmesser von vorzugsweise 180 bis 650 µm agglomeriert sind.

Das Polymere wird durch Polymerisation zu kolloidalen Dispersionen nach dem Verfahren der Emulsionspolymerisation mit oder ohne Einsatz eines Saatpolymeren hergestellt und kann von seiner Herstellung noch Restbestandteile von Polymerisationshilfsmitteln, insbesondere von einem telogen inaktiven, fluorierten Dispergiermittel, enthalten. Es kann ausschließlich aus polymerisierten Tetrafluorethylen-Einheiten aufgebaut sein oder eine einheitliche Modifizierung aufweisen, wie sie zum Beispiel nach US-PS 3 142 665 oder US-PS 3 819 594 erhältlich ist. Das Polymere kann jedoch auch einen nach Menge und Art des Modifizierungsmittels unterschiedlich aufgebauten Kern/Hüllen-Aufbau oder einen Mehrschalenaufbau besitzen, wie er nach den Verfahren in DE-PS 1 795 078, US-PS 4 036 802, DE-OS 2 620 284 oder DE-OS 2 521 738 hergestellt werden kann.

Vorzugsweise besteht das sinterfähige Polymerpulver beziehungsweise der Polymeranteil des füllstoffhaltigen, sinterfähigen Polymerpulvers aus Primärteilchen, die durch Polymerisation zu kolloidalen Dispersionen in wäßrigem Medium in Gegenwart von 0,01 bis 0,5 Gew.-%, bezogen auf das wäßrige Medium, von mindestens einem telogen-inaktiven fluorierten Dispergiermittel nach der Saattechnik hergestellt worden sind, wobei 4 bis 12, vorzugsweise 5 bis 10 Gew.-%, bezogen auf das daraus gewonnene Endpolymere, eines Saatpolymerisates eingesetzt werden, das aus 94 bis 99,99 Gew.-% polymerisierten Tetrafluorethylen-Einheiten und aus 6 bis 0,01 Gew.-% polymerisierten Einheiten eines perfluorierten Monomeren, in dem ein Fluor-Atom durch Chlor ersetzt sein kann, besteht, wobei sich die letzten beiden Gew.-%-Angaben auf das Saatpolymerisat beziehen.

Als perfluorierte Monomere sind beispielsweise geeignet Perfluoralkene der Formel

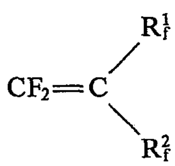

worin bedeuten $R_f^1$ Fluor oder ein perfluorierter Alkylrest mit 1 bis 4, vorzugsweise 1 bis 2 C-Atomen, der geradkettig ist, und $R_f^2$ einen perfluorierten Alkylrest mit 1 bis 4, vorzugsweise 1 bis 2 C-Atomen, der geradkettig ist. Außerdem sind geeignet Perfluor(alkylvinyl)-ether der Formel $CF_2{=}CF{-}OR_f^3$, worin $R_f^3$ ein perfluorierter Alkylrest mit 1 bis 5, vorzugsweise 1 bis 3 C-Atomen bedeutet, der geradkettig ist. Ferner sind geeignet perfluorierte Dioxanylvinylether, wie sie in der DE-OS 2 544 040 beschrieben sind oder Perfluorpropoxyvinylether oder Perfluor-(2-methylen-4-methyl-)1,3-dioxolan.

Bei den obengenannten perfluorierten Alkenen kann ein Fluor-Atom durch ein Chlor-Atom ersetzt sein, vorzugsweise ist dieses Chlor-Atom an ein Kohlenstoff-Atom gebunden, daß die Doppelbindung trägt. Beispielsweise kann in oben angegebener Formel $R_f^1$ auch Chlor sein oder, wenn $R_f^1$ gleich Fluor ist, kann $R_f^2$ Chlor sein.

Als perfluorierte Monomere besonders bevorzugt sind Perfluorpropylvinylether oder Perfluorpropylen.

Sowohl während der Saatpolymerisation als auch während der in Gegenwart der Saat durchgeführten Hauptpolymerisation können ein oder mehrere der obengenannten Monomeren zugegen sein. Chlorhaltige Monomere werden zweckmäßig nur bei der Saatpolymerisation eingesetzt. Wenn die Polymerisation in verschiedenen Stufen durchgeführt wird, kann Art und Menge der eingesetzten Monomeren von Stufe zu Stufe variieren. Der Anteil an perfluorierten Monomeren, der während der Emulsionspolymerisation zugegen ist, beträgt 0,0005 bis 3 Gew.-%, vorzugsweise 0,01 bis 1,0 Gew.-%, bezogen auf eingesetztes Tetrafluorethylen, ohne Berücksichtigung einer eventuellen Saatvorlage, gleichgültig, ob die Emulsionspolymerisation mit oder ohne Vorlage einer kolloidalen Saatdispersion durchgeführt wird. Die perfluorierten Monomeren werden vorzugsweise in einer Gesamtmenge vor Beginn der Polymerisation in das Reaktionsgefäß eindosiert. Sie können jedoch auch in die laufende Polymerisation nachgeschleust werden und zwar zu jedem Zeitpunkt, bevor ein Umsatz von 99,5%,

vorzugsweise 75%, erreicht ist. Insbesondere kann die in Gegenwart der Saatvorlage durchgeführte Hauptpolymerisation zunächst ausschließlich mit Tetrafluorethylen begonnen werden. Die perfluorierten Monomeren werden dann bei einem Tetrafluorethylen-Umsatz von 25 bis 99,5%, vorzugsweise von 75 bis 99,5%, zugeschleust. Ebenfalls kann auch ein Teil der erforderlichen Menge an perfluorierten Monomeren vorgelegt und ein weiterer Teil während der Polymerisation nachgeschleust werden. Gegebenenfalls kann die Zugabe der perfluorierten Monomeren von Beginn der laufenden Polymerisation an oder ab Erreichung des jeweiligen gewünschten Umsatzgrades kontinuierlich oder in Portionen erfolgen.

Besonders bevorzugt ist ein sinterfähiges, gegebenenfalls füllstoffhaltiges Polymerpulver, dessen Polymeranteil aus 98,5 bis 99,99 Gew.-% polymerisierten Tetrafluorethylen-Einheiten und 1,5 bis 0,01 Gew.-% polymerisierten Einheiten von mindestens einem offenkettigen, perfluorierten Monomeren besteht, das eine $CF_2=C<$-Gruppe, 3 bis 6 Kohlenstoff-Atome und 0 bis 2 Sauerstoff-Atome enthält.

Das füllstoffhaltige, sinterfähige Polymerpulver besteht aus 95 bis 60 Vol.-%, vorzugsweise 85 bis 70 Vol.-%, eines überwiegend Tetrafluorethylen-Einheiten enthaltenden Polymeren und 5 bis 40 Vol.-%, vorzugsweise 15 bis 30 Vol.-%, eines Füllstoffs, wobei sich die Vol.-%-Angaben auf das füllstoffhaltige Polymerpulver beziehen. Der Füllstoff soll einen Schmelzpunkt von mindestens 380°C, vorzugsweise von mindestens 450°C aufweisen und soll unter Verarbeitungsbedingungen, das heißt unter 400 bis 450°C, gegebenenfalls unter Schutzgasatmosphäre, beispielsweise Stickstoff, nicht mit dem Polymeren reagieren. Die Teilchengröße des Füllstoffs soll höchstens 90% der Teilchengröße des sinterfähigen, füllstoffhaltigen Polymerpulvers betragen. Nach unten ist die Teilchengröße des Füllstoffs durch deren Herstellbarkeit, Reiß- und Handhabbarkeit auf eine mittlere Teilchengröße von 0,1 µm begrenzt. Vorzugsweise werden Füllstoffe mit einer mittleren Teilchengröße von 2 bis etwa 100 µm und insbesondere mit einer solchen von 5 bis 60 µm eingesetzt. Sofern es sich um faserige Produkte handelt, beziehen sich die Teilchengrößenangaben auf den Durchmesser der Fasern.

Als Füllstoffe geeignet sind Metalle und Metall-Legierungen, beispielsweise Eisen, Kupfer, Silber, Bronze, Chromnickelstahl sowie Metalloxide, beispielsweise Aluminiumoxid, Titanoxid, Chromoxid, Mangandioxid, Siliciumdioxid oder Metallsulfide, beispielsweise Molybdändisulfid sowie Metallsulfate, beispielsweise Bariumsulfat oder Metallsilikate, beispielsweise Glas-Pulver oder -Fasern, Asbest, Glimmer, Schamotte, Keramik, ferner Kohlenstoff, wie Graphit, Kohle oder Koks.

Es können im Rahmen der obigen Volumenprozent-Angaben ein oder auch mehrere Füllstoffe eingesetzt werden.

Die Art, zugesetzte Menge und Teilchengestalt des beziehungsweise der verwendeten Füllstoffe, beeinflußt die Dichte, spezifische Oberfläche, Rieselfähigkeit, das Schüttgewicht sowie auch die Kornstabilität des sinterfähigen, füllstoffhaltigen Polymerpulvers zum Teil erheblich, weshalb zur Feststellung der Vorteile der nach dem erfindungsgemäßen Verfahren erzeugten füllstoffhaltigen Polymerpulver gegenüber solchen gemäß Stand der Technik nur exakt verglichen werden kann, wenn jeweils der gleiche Füllstoff beziehungsweise die gleiche Füllstoffmischung in der gleichen Menge eingesetzt wird.

Das sinterfähige, füllstoffhaltige Polymerpulver gemäß vorliegender Erfindung hat eine spezifische Oberfläche von 1,5 bis 8, vorzugsweise von 2 bis 7 $m^2/g$; eine Rieselfähigkeit kleiner als 3,1, vorzugsweise kleiner als 2,9 s/25 g; ein Schüttgewicht von 550 bis 1400, vorzugsweise 600 bis 1400 g/l; eine Kornstabilität von 1 bis 3,5, vorzugsweise 1 bis 3,0 s/50 g; eine Deformation unter Last von weniger als 8%, vorzugsweise weniger als 6% und eine Kugeldruckhärte von größer als 30 $N/mm^2$, vorzugsweise größer als 35 $N/mm^2$ bis etwa 45 $N/mm^2$. Diese Eigenschaften werden nach Methoden bestimmt, die weiter unten angegeben sind.

Die sinterfähigen, nicht füllstoffhaltigen Polymerpulver gemäß vorliegender Erfindung besitzen eine spezifische Oberfläche von 5 bis 11, vorzugsweise von 7 bis 9 $m^2/g$; ein standardisiertes spezifisches Gewicht von kleiner als 2,2, vorzugsweise kleiner als 2,17; eine Rieselfähigkeit kleiner als 3,1, vorzugsweise 2,6 s/25 g; ein Schüttgewicht von 750 bis 860, vorzugsweise von 750 bis 800 g/l; eine Kornstabilität von 2,7 bis 5, vorzugsweise 3 bis 4 s/50 g und einen Formbarkeitsindex von weniger als 11, vorzugsweise weniger als 8.

Gegenstand der Erfindung ist ferner ein Verfahren zur Herstellung eines sinterfähigen, gegebenenfalls füllstoffhaltigen Polymerpulvers auf Basis eines Polymeren, das durch Polymerisation in wäßrigem Medium in Gegenwart von 0,01 bis 0,5 Gew.-%, bezogen auf das wäßrige Medium, von mindestens einem telogen-inaktiven, fluorierten Dispergiermittel unter Bildung einer kolloidalen Dispersion mit einer mittleren Teilchengröße des Polymeren von 0,05 bis 0,8 µm und einem Gesamtfeststoffgehalt von 10 bsi 50 Gew.-%, bezogen auf die Dispersion, gewonnen wurde und das besteht aus 98,5 bis 100 Gew.-% polymerisierten Tetrafluorethylen-Einheiten und 1,5 bis 0 Gew.-% polymerisierten Einheiten von mindestens einem perfluorierten Monomeren, in dem ein Fluor-Atom durch Chlor ersetzt sein kann, und das mit Tetrafluorethylen copolymerisierbar ist, wobei die Polymer-Dispersion auf einen Feststoffgehalt von etwa 5 bis 15 Gew.-% eingestellt wird und bei 10 bis 85°C mit einer Energie von 4 bis etwa 200 $Js^{-1}l^{-1}$ gerührt und eine organische Flüssigkeit zugegeben wird, wonach gegebenenfalls der Füllstoff zugesetzt und nach Bildung eines Granulates gewaschen, dann von der flüssigen Phase endgültig abgetrennt und getrocknet wird, dadurch gekennzeichnet, daß vor dem Zusatz der organischen Flüssigkeit die Dispersion unter Zugabe von 0 bis 2 Gew.-%, bezogen auf die Dispersion, von mindestens einem

wasserlöslichen, dissoziierenden, anorganischen Salz, das ein Ammoniumkation oder ein Metallkation enthält und/oder einer wasserlöslichen Säure mit der der pH der Dispersion auf 0 bis 6 eingestellt wird bis zu einer ausreichenden Verdickung der Dispersion, angezeigt durch deutlich sichtbare optische Inhomogenitäten, gerührt und 0 bis 10 Minuten danach, ohne zwischenzeitliche Abscheidung, Trocknung und Mahlung des Polymeren, 1 bis 5 Gew.-%, bezogen auf die Dispersion einer organischen Flüssigkeit, die die in Dispersion befindlichen Polymerteilchen gut benetzt und zu weniger als 15 Gew.-% in Wasser bei 20°C löslich ist, zur Dispersion gegeben werden.

Für das Verfahren geeignete Polymerdispersionen können nach bekannten Verfahren, wie sie beispielsweise in den Schriften US 2 559 752; 3 088 941; 3 142 665; 3 819 594; 4 036 802; DE-OS 1 795 078; 2 521 738 und 2 620 284 beschrieben sind, hergestellt werden. Es kann ohne und mit Vorlage eines Saatpolymerisates gearbeitet werden, in Abwesenheit oder Anwesenheit der weiter oben näher beschriebenen perfluorierten Monomeren mit der ebenfalls bereits beschriebenen Polymerisationstechnik. Die Temperatur während der Polymerisation beträgt im allgemeinen 10 bis 80°C, der Druck 0,2 bis 3,5 MPa.

Vorzugsweise werden Dispersionen eingesetzt mit einer mittleren Teilchengröße des Polymeren von 0,05 bis 0,8 μm, weiterhin bevorzugt sind Dispersionen, die in Gegenwart von perfluorierten Monomeren hergestellt wurden und deren Polymerteilchen aus 98,5 bis 99,99 Gew.-% polymerisierten Tetrafluorethylen-Einheiten und 1,5 bis 0,01 Gew.-% polymerisierten Einheiten dieser perfluorierten Monomeren bestehen. Besonders bevorzugt sind hierbei perfluorierte Monomere, die eine $CF_2=C\lt$-Gruppe, 3 bis 6 Kohlenstoff-Atome und 0 bis 2 Sauerstoff-Atome enthalten. Insbesondere werden als perfluorierte Monomere Perfluorpropylen oder geradkettige Perfluoralkylvinylether, vorzugsweise Perfluorpropylvinylether eingesetzt. Nach Beendigung der Polymerisation und Entfernung nicht umgesetzter Monomerer wird die Dispersion gegebenenfalls mit Wasser auf einen Gesamt-Feststoffgehalt von etwa 5 bis 15, vorzugsweise von 9 bis 11 Gew.-% eingestellt, sofern sie nicht schon mit diesem Feststoffgehalt aus der Polymerisation kommt und, wenn erforderlich, auf eine Temperatur von 10 bis etwa 85°C gebracht. Vorzugsweise wird bei einer Temperatur von 15 bis 60°C, insbesondere von 15 bis 40°C weitergearbeitet.

Die Dispersion wird nun mit einer Energie von 4 bis 200 $Js^{-1}l^{-1}$, vorzugsweise bei 15 bis 70 $Js^{-1}l^{-1}$ gerührt, bis zu einer ausreichenden Verdickung der Dispersion, angezeigt durch das Auftreten deutlich sichtbarer optischer Inhomogenitäten (sogenannter »Schlieren«). Zum Rühren können Rührorgane der verschiedensten Ausführung verwendet werden, beispielsweise Blatt-, Paddel-, Propeller-, Impeller- oder Ankerrührer oder auch Hochleistungsrührer, beispielsweise die Type »Ultra-Turrax®« der Firma Lutz 4/22-640. Letztgenannte Rührer werden jedoch vorzugsweise erst bei oder nach Zugabe der weiter unten näher beschriebenen organischen Flüssigkeiten eingeschaltet. Zur Erhöhung der Rührintensität können Stromstörer im Rührgefäß eingebaut sein.

Im allgemeinen ist es ausreichend, die genügende Verdickung der Dispersion visuell anhand der optischen Inhomogenitäten (Schlieren) festzustellen. Hierfür können jedoch auch andere Kriterien, zum Beispiel ein plötzlicher Anstieg der Leistungsaufnahme des Rührers oder der in einem Durchflußviskosimeter gemessenen Viskosität herangezogen werden.

Vor oder nach Beginn des Rührens können der Dispersion bis zu 2 Gew.-%, vorzugsweise 0,01 bis 1 Gew.-%, bezogen auf die Dispersion von mindestens einem wasserlöslichen, dissoziierenden, anorganischen Salz, das ein Ammoniumkation oder ein Metallkation enthält und/oder einer wasserlöslichen Säure, mit der der pH der Dispersion auf 0 bis 6 eingestellt wird, zugegeben werden. Als Salze sind beispielsweise geeignet neutrale oder saure Salze des Natriums, Kaliums, Calciums, Magnesiums, Aluminiums von Mineralsäuren, beispielsweise Salzsäure, Schwefelsäure, Salpetersäure oder Phosphorsäure. Bevorzugt eingesetzt werden unter 300°C flüchtige Ammoniumsalze, beispielsweise Ammoniumchlorid oder Ammoniumnitrat. Es können auch Mischungen verschiedener Salze verwendet werden. Anstelle der weiter oben beschriebenen Salze oder zusammen mit ihnen werden eine oder mehrere wasserlösliche Säuren eingesetzt, mit denen der pH der Dispersion auf 0 bis 6, vorzugsweise auf 1 bis 4, eingestellt wird. Bevorzugt werden hierzu starke Mineralsäuren verwendet, deren 1 normale wäßrige Lösung bei 20°C einen pH von kleiner als 1 aufweist und die relativ leicht flüchtig sind, das heißt die gegebenenfalls als Azeotrop mit Wasser bei 0,1 MPa unterhalb 340°C sieden oder sich unter Bildung ausschließlich flüchtiger Stoffe zersetzen. Beispiele für solche Säuren sind Salzsäure, Salpetersäure und Schwefelsäure.

Nachdem die Dispersion, wie oben beschrieben, ausreichend verdickt ist, werden 1 bis 5 Gew.-%, vorzugsweise 2 bis 4 Gew.-%, bezogen auf die Dispersion, mindestens einer organischen Flüssigkeit zugesetzt, die die in der Dispersion befindlichen Polymerteilchen gut benetzt und zu weniger als 15 Gew.-% in Wasser bei 20°C löslich ist. Das Rühren wird hierbei fortgesetzt, vorteilhaft wird während 1 bis 6 Minuten und insbesondere während 2 bis 4 Minuten mit erhöhter Rührenergie, beispielsweise unter Einschalten eines Hochleistungsrührers, wie oben beschrieben, weitergearbeitet. Es kann auch der bisherige Rührer abgeschaltet und nur der Hochleistungsrührer eingeschaltet werden. Die verstärkte Rührenergie soll so lange wirken, daß eine schnelle und vollständige Granulierung des Polymeren erreicht wird. Bei zu langer Einschaltung der intensiven Rührung wird das gebildete Granulat in zunehmendem Maße zerkleinert, so daß mit der Wirkungsdauer der Intensivrührung die Korngröße des

Granulates eingestellt werden kann.

Nach Ausschalten der intensiven Rührung wird, wie weiter oben beschrieben, noch etwa 10 bis 100 Minuten, vorzugsweise 20 bis 80 Minuten, weitergerührt. Während dieser Rührzeit oder anschließend wird der Feststoff durch Filtrieren oder Absieben 2- bis etwa 7mal von der flüssigen Phase getrennt und zwecks Waschung mit Wasser erneut aufgerührt. Dann wird der Feststoff endgültig von der flüssigen Phase getrennt und bei Temperaturen von 100 bis 290°C, vorzugsweise 200 bis 280°C, getrocknet. Hierfür kann beispielsweise ein Bandtrockner oder ein Trockenschrank verwendet werden, wobei das Trockengas, in der Regel Luft, beispielsweise durch Umpumpen, Ventilation oder Absaugen bewegt wird. In der Regel wird bei normalem Atmosphärendruck getrocknet. Es kann aber auch Unterdruck verwendet werden.

Die Zugabe der organischen Flüssigkeit zur Dispersion kann unmittelbar nach Feststellung der ausreichenden Verdickung erfolgen oder bis zu 10 Minuten danach. Vorzugsweise wird die organische Flüssigkeit 0 bis 3 Minuten und insbesondere 0 bis 1 Minute nach Auftreten der optischen Inhomogenitäten zur Dispersion gegeben.

Als organische Flüssigkeiten sind beispielsweise geeignet: Benzin, n-Hexan, n-Octan, Cyclohexan, Benzol, Toluol, Butylacetat, Amylacetat, n-Butanol, n-Hexanol, Diethylether, Diisopropylether, Chloroform und Methylenchlorid. Es können auch Mischungen mehrerer organischer Flüssigkeiten zugegeben werden. Vorteilhaft werden organische Flüssigkeiten eingesetzt, die in Wasser bei 20°C zu weniger als 3 Gew.-% löslich sind, insbesondere ein Kohlenwasserstoff oder ein Gemisch von Kohlenwasserstoffen, dessen Siedepunkt unter einem Druck von 0,1 MPa bei 60 bis 180°C, vorzugsweise bei 80 bis 150°C, liegt.

Zur Herstellung füllstoffhaltiger, sinterfähiger Polymerpulver werden die weiter oben beschriebenen Füllstoffe in den dort angegebenen Mengen eingesetzt. Die Zugabe des Füllstoffs bzw. der Füllstoffe erfolgt vorzugsweise zusammen mit der Zugabe der organischen Flüssigkeit oder unmittelbar danach. Mit dem erfindungsgemäßen Verfahren gelingt es, eine wäßrige, kolloidale Dispersion eines überwiegend Tetrafluorethylen-Einheiten enthaltenden Polymeren, die in Gegenwart eines Dispergiermittels nach der Emulsionstechnik hergestellt wurde, in einem Arbeitsgang ohne zwischenzeitliche Trocknung und Zerkleinerung des Polymeren unter Bildung eines Granulates aufzuarbeiten, das für die Weiterverarbeitung im Preß-Sinter-Verfahren oder im RAM-Extrusions-Verfahren geeignet ist. Es werden hierbei Formkörper mit sehr guten mechanischen Werten, wie Zugfestigkeit und Bruchdehnung, und elektrischen Werten, wie Durchschlagfestigkeit, erhalten. Aus Sinterblöcken geschälte Folien sind praktisch rißfrei, während aus Emulsionspolymerisaten, die nach dem Stand der Technik hergestellt werden, nur Sinterblöcke erhältlich sind, die eine erhebliche Neigung zur Rißbildung zeigen. Mit dem erfindungsgemäßen Verfahren sind sinterfähige, gegebenenfalls füllstoffhaltige Polymerpulver herstellbar, die eine besonders gute Eigenschaftskombination bezüglich Schüttgewicht, Rieselfähigkeit, Kornstabilität, spezifischer Oberfläche und Verformbarkeitsindex bei guter Thermostabilität aufweisen.

Das neue Verfahren ist wenig störanfällig und ohne größeren Aufwand an Apparate- und Energiekosten durchführbar.

Die in der vorstehenden Beschreibung und in den nachfolgenden Beispielen angegebenen Parameter werden nach folgenden Methoden bestimmt:

1. Spezifische Oberfläche:
   Sie wird gemessen mit dem Areatron (Hersteller Firma Leybold, Köln) nach der Methode von S. Brunauer, P. Emmet und E. Teller; J. Amer. Chem. Soc. 60, 1938, S. 309 ff.

2. Schüttgewicht:
   Bestimmung nach DIN 53 468.

3. Rieselfähigkeit:
   Ein Polyethylentrichter mit folgenden Abmessungen:

   | | |
   |---|---|
   | innerer Durchmesser oben: | 100 mm; |
   | innerer Durchmesser unten: | 12 mm; |
   | Höhe des Konus: | 75 mm; |

   ist an einem Vibrator (Vibro-Mixer E 1, Fa. AG für Chemie-Apparatebau Zürich) so befestigt, daß der Abstand vom Motorgehäuse des Vibrators bis zur Trichtermitte 125 mm beträgt. Es werden 25 g Produkt in den Trichter eingefüllt und der Vibrator mit einer Schwingungsamplitude von 2 mm eingeschaltet. Die Zeit (in s) vom Einschalten des Vibrators bis zum vollständigen Leerlaufen des Trichters wird gemessen. Sie wird, bezogen auf die ausgelaufene Menge, als Maß für die Rieselfähigkeit angegeben.

4. Kornstabilität:
   Ein Aluminiumbecher (Höhe 150 mm; Innendurchmesser: 100 mm) mit einem flachen, aus Polytetrafluorethylen gefertigten Boden ist mit einem dreiflügeligen Propellerrührer (Durchmesser des

Rührorgans: 96 mm), der durch einen stufenlos regelbaren Rührmotor angetrieben wird, ausgerüstet. Die Rührwelle ist im Becherboden gelagert.
In diesen zylindrischen Becher werden 50 g Polymerpulver, dessen Rieselfähigkeit zuvor bestimmt wurde, eingefüllt und 5 Minuten gerührt, wobei sich die Rührgeschwindigkeit nach dem mittleren Korndurchmesser des zu untersuchenden Pulvers richtet. Bei mittleren Korndurchmessern bis 500 μm wird mit 400 UpM oberhalb 500 μm bei 800 UpM gerührt. Bei füllstoffhaltigen Pulvern wird unabhängig vom mittleren Korndurchmesser eine Rührgeschwindigkeit von 600 UpM sowie eine Rührzeit von 2 Minuten angewendet.
Nach Beendigung des Rührens wird erneut die Rieselfähigkeit des Polymerpulvers bestimmt. Alle Rieselfähigkeitsmessungen werden mit 50 g Pulver durchgeführt. Die Differenz der Rieselfähigkeiten vor und nach Rühren des Pulvers (in s/50 g) wird als Maß für die Kornstabilität angegeben. Je kleiner dieser Wert ist, um so höher ist die Kornstabilität.

5. Standardisiertes spezifisches Gewicht (SSG)
Die Bestimmung erfolgt nach ASTM 1457-56 T. Bei nicht füllstoffhaltigen Polymerpulvern werden entsprechend der obengenannten Vorschrift kreisförmige Sinterplatten mit einem Durchmesser von 25 mm, einer Dicke von 3,5 mm verwendet, die bei einem Preßdruck von 34,5 MPa hergestellt wurden.
Bei mit Glas gefüllten Polymerpulvern werden für die Bestimmung nach ASTM kreisförmige Sinterplatten mit einem Durchmesser von 80 mm und einer Dicke von 2 mm verwendet. Für die Messung der mit Kohle, Graphit oder Bronze gefüllten Polymerpulver werden kreisförmige Platten mit einem Durchmesser von 45 mm und einer Dicke von 4 mm eingesetzt.

6. Formbarkeitsindex:
Es werden zwei Messungen des standardisierten spezifischen Gewichtes (SSG) nach ASTM 1457-56 T an kreisförmigen Sinterplatten, wie oben beschrieben, durchgeführt. Für die erste Messung wird eine Sinterplatte verwendet, die mit einem Druck von 34,5 MPa und für die zweite Messung eine Sinterplatte, die bei einem Druck von 13,8 MPa gepreßt wurde. Das Ergebnis der zweiten Messung wird von dem der ersten Messung abgezogen und die ermittelte Zahl mit 100 multipliziert.

7. Mittlere Teilchengröße (d 50):
Die Bestimmung erfolgt durch Siebanalyse nach DIN 53 477.

8. Prüfungen an 1-kg-Sinterblöcken:
1 kg des Polymerpulvers wird unter einem Druck von 25,0 MPa zu einem zylindrischen Block verpreßt und anschließend 4 Stunden bei 375°C gesintert, mit nachfolgender Abkühlung mit einer Geschwindigkeit von 45°C/Stunde. Die Blöcke haben einen Durchmesser von 95 mm.

9. Rißbildung:
Die gesinterten 1-kg-Blöcke werden bis auf einen inneren Kern mit einem Durchmesser von 49 mm zu einer 200 μm starken Folie geschält und der Durchmesser des ungeschälten Restblocks beim ersten Auftreten von Rissen als Maß für die Rißbildung zugrundegelgt. An den erhaltenen Schälfolien werden Reißfestigkeit und Reißdehnung sowie die elektrische Durchschlagsfestigkeit, wie weiter unten beschrieben, ermittelt.

10. Reißfestigkeit und Reißdehnung:
Die Bestimmung erfolgt nach ASTM 1457-62 T.

11. Elektrische Durchschlagsfestigkeit:
Sie wird nach VDE 0303/T 2 gemessen. Als Prüfgerät wird ein Isolationsprüfgerät der Firma Meßwandler Bau GmbH, Bamberg; Form IPG 30/05; Elektroden oben Kugel 20 mm Durchmesser, unter Platte 50 mm Durchmesser, verwendet. Das Meßgerät ist so umgebaut, daß ein Motor die Folie nach jedem Durchschlag um 10 cm weiterzieht, wonach automatisch eine neue Messung beginnt. Die zum Durchschlag benötigte Spannung wird mittels eines angeschlossenen Schreibers als Spitze (Pik) aufgezeichnet.
Zur Berechnung eines Mittelwertes werden mindestens zehn Einzelwerte herangezogen, wobei Werte, die unterhalb 75% des zweithöchsten Wertes liegen, nicht zur Berechnung herangezogen werden. Die Anzahl der Einzelwerte, von welchen der Mittelwert bestimmt wird, muß jedoch mindestens 70% der gesamten Einzelwerte betragen.

12. Prüfungen an Rohren und Stäben, die durch RAM-Extrusion hergestellt wurden:
Das zu prüfende Polymerpulver wird entweder als solches verwendet oder einer Temperung während 30 Minuten bei 340°C unterworfen. Nach der Temperung werden die mittlere Teilchengröße (d 50), das Schüttgewicht und die Rieselfähigkeit bestimmt. Diese Pulver werden mit Hilfe eines RAM-Extruders mit einer Sinterzonen-Länge von 800 mm mit der Temperatur-Einstellung in Extrusions-Richtung: 380, 390, 380°C und mit einem Ausstoß von 3 m/Stunde zu Rohren von einem Innendurchmesser von 32 mm und einem Außendurchmesser von 39 mm, beziehungsweise mit einem Ausstoß von 2 m/Stunde zu Stäben mit einem Durchmesser von 22 mm extrudiert.
Die Rohre werden auf 2 mm Wandstärke abgedreht, Probekörper in Extrusionsrichtung ausgestanzt und nach ASTM 1708 zur Messung der Reißfestigkeit und Reißdehnung verwendet.
Aus den Stäben werden Plättchen von 2 mm Stärke in Extrusionsrichtung herausgefräst, aus diesen wiederum Probekörper ausgestanzt und nach ASTM 1708 Reißfestigkeit und Reißdehnung bestimmt.

13. Prüfungen an füllstoffhaltigen Polymerisatpulvern
Reißfestigkeit und Reißdehnung werden nach ASTM-D 1708-66 bestimmt. Bei glasfasergefüllten Polymerpulvern werden die Prüfkörper aus gepreßten Platten ausgestanzt, deren Herstellung weiter oben bei der Messung des standardisierten spezifischen Gewichtes (SSG) angegeben ist, wobei die Platten jedoch eine Dicke von 1,6 mm haben. Bei mit Kohle, Graphit oder Bronze gefüllten Polymerpulvern werden zylindrische Preß-Sinter-Körper von 45 mm Durchmesser und 75 mm Höhe durch Pressen bei für den Füllstoffgehalt der Polymerpulver spezifischen Drücken von 35 bis 70 MPa und Sinterung bei 380°C während 4 Stunden mit einer Aufheiz- und Abkühlzeit von je 8 Stunden hergestellt. Für die Bestimmung von Reißfestigkeit und Reißdehnung wird in Preßrichtung eine 2 mm dicke Scheibe entnommen und aus dieser die Prüfkörper ausgestanzt.
Die Bestimmung der Kugelhärte erfolgt nach DIN 53 456 an 4 mm dicken gepreßten Scheiben, deren Herstellung bei der Messung des standardisierten spezifischen Gewichtes (SSG) beschrieben ist.

14. Deformation unter Last:
Die Bestimmung erfolgt nach ASTM-D 621 bei 20°C an runden Prüfkörpern von 10 mm Durchmesser und 10 mm Dicke.

Nachfolgende Beispiele sollen die Erfindung näher erläutern:
Die eingesetzten Polymerisatdispersionen werden nach der Saattechnik nach folgendem Verfahren hergestellt: In einen emaillierten Polymerisations-Autoklaven mit einem Fassungsvermögen von 47 l, der mit einem Impellerrührer ausgestattet ist, werden 31 l entionisiertes Wasser, 0,75 $cm^3$ einer 2 gew.-%igen Kupfer-(II)-sulfatlösung, 27,5 g Perfluoroctansäure und 37,5 $cm^3$ einer 18 gew.-%igen Ammoniaklösung in Wasser gegeben. Nach mehrmaliger Spülung des Autoklaven mit Stickstoff wird gegen schwachen Tetrafluorethylenstrom die in untenstehender Tabelle I angegebene Menge perfluoriertes Monomeres flüssig oder gasförmig eindosiert. Danach wird der Druck durch Zuführung von Tetrafluorethylen auf 1,4 MPa erhöht und die Polymerisation durch Nachdosieren von 1,2 g Natriumdisulfit und 1,15 g Ammoniumpersulfat in wäßrigen Lösungen unter Rühren gestartet. Polymerisiert wird bei einer Temperatur von 35°C. Wenn die Dispersion einen Feststoffgehalt von 10 Gew.-% erreicht hat, wird sie unterbrochen.
Die in Tabelle I angegebenen Mengen Saatpolymerisat (Gew.-%, bezogen auf Endfeststoff) werden in Form einer 10 gew.-%igen Saatdispersion, die wie oben beschrieben hergestellt wurde, in einen emaillierten Polymerisations-Autoklaven von 47 l Fassungsvermögen, zusammen mit der zur Erreichung einer Flotte von 31,2 l benötigten Menge entionisierten Wassers, 27,3 g Perfluoroctansäure, 37,5 $cm^3$ Ammoniak (18 gew.-%ige Lösung in Wasser) und 0,93 $cm^3$ einer 2 gew.-%igen Kupfer-(II)-sulfatlösung in Wasser eingegeben. Nach mehrmaliger Stickstoff-Spülung wird durch Zuführung von Tetrafluorethylen der Druck auf 1,4 MPa erhöht und die Polymerisation durch Nachdosieren von 1,37 g Natriumdisulfit und 2,18 g Ammoniumpersulfat, jeweils in wäßriger Lösung, unter Rühren gestartet. Polymerisiert wird bei einer Temperatur von 28°C. Nach Erreichen des in untenstehender Tabelle I angegebenen Umsatzes wird die angegebene Menge des perfluorierten Monomeren und, falls nicht anders vermerkt, gleichzeitig Diethylenglykol in wäßriger Lösung zudosiert. Wenn die polymerisierende Mischung einen Feststoffgehalt von 20 Gew.-% erreicht hat, wird die Polymerisation beendet. In nachfolgender Tabelle I sind die Polymerisationsparameter zusammengefaßt. Die einzelnen senkrechten Spalten enthalten folgende Angaben:

Spalte 1 Buchstaben zur Kennzeichnung des jeweiligen Polymerisationsansatzes;
Spalte 2 die Art des bei der Herstellung der Saat-Dispersion außer Tetrafluorethylen zugegebenen perfluorierten Monomeren;
Spalte 3 die Menge dieses perfluorierten Monomeren in Gew,-%, bezogen auf das gebildete Saatpolymere;
Spalte 4 den Einbau dieses perfluorierten Monomeren in die Polymerteilchen in Gew.-%, bezogen auf das gebildete Saat-Polymere;
Spalte 5 die Menge des verwendeten Saat-Polymeren in Gew.-%, bezogen auf das Endpolymere;
Spalte 6 das in der zweiten Polymerisationsstufe außer Tetrafluorethylen zugegebene perfluorierte Monomere;
Spalte 7 die Menge dieses perfluorierten Monomeren in Gew,-%, bezogen auf das Endpolymere;

Spalte 8 die Angabe, bei wieviel Prozent Umsatz das perfluorierte Monomere zugesetzt wird;
Spalte 9 welche Menge des perfluorierten Monomeren in der zweiten Stufe in das Endpolymere eingebaut werden in Gew.-%, bezogen auf das Endpolymere;
Spalte 10 die Art des in der zweiten Stufe zur Stabilisierung in wäßriger Lösung zugegebenen Mittels;
Spalte 11 die Menge dieses Mittels in Teilen pro 1 Million Teile der Polymerisationsflotte und in Spalte 12 nach welchem Umsatz in Prozent das Stabilisierungsmittel zugesetzt wird.

Tabelle I

Herstellung der Polytetrafluorethylen-Dispersionspolymerisate

| Polym. Ansatz | Saatmodifizierung mit | Saatstufe | | Saatpolym. bez. auf Endfestst. Gew.-% | Hauptpolymerisation | | | | Stabilisierung | | |
|---|---|---|---|---|---|---|---|---|---|---|---|
| | | Modifiz.-Vorlage Gew.-% | Mittel Einbau Gew.-% | | Hüllenmodifiz. mit | Zuschleusung Gew.-% | Zuschleusung Ums.-% | Hülleneinbau Gew.-% | Mittel | TpM | Umsatz % |
| A | Saat aus 100% Polytetrafluorethylen | — | — | 5,7 | — | — | — | — | Dioxan | 20 | 0 (vorgelegt) |
| B | $CF_3CF{=}CF_2$ | 2,2 | 1,0 | 6,0 | — | — | — | — | DEG[1]) | 20 | 50 |
| C | $CF_3CF{=}CF_2$ | 2,2 | 1,0 | 8,4 | $CF_3(CF_2)_2OCF{=}CF_2$ | 0,6 | 0 (vorgelegt) | 0,22 | | keine | |
| D | $CF_3CF{=}CF_2$ | 2,2 | 1,0 | 8,4 | $CF_3(CF_2)_2OCF{=}CF_2$ | 0,5 | 33 | 0,16 | | keine | |
| E | $CF_3CF{=}CF_2$ | 2,2 | 1,0 | 8,4 | $CF_3(CF_2)_2OCF{=}CF_2$ | 0,5 | 0 (vorgelegt) | — | | keine | |
| F | $CF_3-(CF_2)_2OCF{=}CF_2$ | 1,0 | 0,1 | 8,4 | $CF_3CF{=}CF_2$ | 0,5 | 75 | 0,15 | DEG | 20 | 0 (vorgelegt) |
| G | $CF_3-(CF_2)_2OCF{=}CF_2$ | 1,0 | 0,1 | 8,4 | keine | — | — | — | DEG | 20 | 0 (vorgelegt) |
| H | $CF_3CF{=}CF_2$ | 2,2 | 1,0 | 8,4 | $CF_3CF{=}CF_2$ | 1,0 | 0 (vorgelegt) | 0,3 | | keine | |
| I | ohne Saatvorlage | — | — | — | $CF_3(CF_2)_2-O-CF{=}CF_2$ | 0,5 | 0 (vorgelegt) | 0,1 | | keine | |
| J | $CF_3CF{=}CF_2$ | 2,2 | 0,6 | 7,2 | $CF_3CF{=}CF_2$ | 0,85 | 96 | 0,02 | Dioxan | 20 | 0 (vorgelegt) |

[1]) DEG = Diethylenglykol

Beim Ansatz A wird in der ersten Stufe der Polymerisation (Saat) außer Tetrafluorethylen kein weiteres perfluoriertes Monomeres zugesetzt, jedoch 30 Teile pro 1 Million Teile der Flotte Dioxan als Regler verwendet. Ebenso wird in der zweiten Stufe (Polymerisation der Hülle um den Saatkern) außer Tetrafluorethylen kein weiteres Monomeres zugegeben. Beim Ansatz I wird die erste Stufe der Polymerisation weggelassen und nur die zweite Stufe der Polymerisation, wie oben beschrieben, jedoch ohne den Einsatz einer Saatdispersion, durchgeführt.

Beim Ansatz B werden anstelle des Polymerisations-Startersystems Ammoniumpersulfat/Natriumdisulfit nur 95 mg Ammoniumpersulfat und 31 mg Azodicarbonamid verwendet. Beim Ansatz J werden in der Hauptpolymerisation 46 mg Azodicarbonamid und 96 mg Ammoniumpersulfat eingesetzt.

Die wie beschrieben hergestellten Polymerisatdispersionen werden erfindungsgemäß wie folgt zu nicht füllstoffhaltigen Polymerisatpulvern granuliert: In ein 30 l-Glasgefäß, das mit einem Rührwerk der Firma Ekato (Typ R 46-000; Durchmesser des Rührorgans = 15 cm) sowie einem Rührer des Fabrikats »Ultra-Turrax®« (Typ Lutz, 4/22-640; Durchmesser des Rührorgans = 3,3 cm) ausgestattet ist, werden 12 kg Polymerisatdispersion mit einem Feststoffgehalt von 20 Gew.-% gegeben und mit Wasser auf einen Feststoffgehalt von 10 Gew.-% verdünnt. Nun wird der Ekato-Rührer eingeschaltet mit einer Umdrehungszahl von 700 UpM und einer Rührenergie von 34 $Js^{-1}l^{-1}$, anschließend werden 30 $cm^2$ konzentrierte Salzsäure zugegeben. Nach kurzer Zeit werden deutliche optische Inhomogenitäten (sogenannte Schlieren) in der Dispersion beobachtet, die eine ausreichende Verdickung anzeigen. Jetzt wird die in untenstehender Tabelle II in Gew.-%, bezogen auf Polymeres, angegebene Menge Benzin vom Siedepunktsbereich 80 bis 110°C zugegeben und für 3 Minuten der Ultra-Turrax®-Rührer eingeschaltet mit einer Drehzahl von $1 \cdot 10^4$ UpM und einer Rührenergie von 25 $Js^{-1}l^{-1}$. Nach Abschalten des Ultra-Turrax®-Rührers wird mit einer Drehzahl von 700 UpM mit dem Elektro-Rührer 10 Minuten lang weitergerührt, das gebildete Granulat von der flüssigen Phase durch Absieden getrennt, in 20 l entionisiertem Wasser unter Rühren aufgeschlämmt und dieser Waschvorgang fünfmal wiederholt. Die letzte Aufschlämmung wird weitere 30 Minuten, wie oben beschrieben, gerührt, dann erneut über ein Sieb granulat und Wasser getrennt und das Granulat in einem Umlufttrockenschrank während 6 Stunden bei 280°C zu einem Polymerpulver getrocknet. An diesem durch Granulierung gewonnenen Polymerpulver werden die in untenstehender Tabelle II angegebenen Werte gemessen.

In der ersten senkrechten Spalte der Tabelle ist die laufende Nummer des jeweiligen Beispiels angegeben, in der zweiten senkrechten Spalte der Polymerisationsansatz, nach dem die eingesetzte Dispersion hergestellt wurde. Die Messung der Pulvereigenschaften erfolgte nach den weiter oben beschriebenen Methoden.

Tabelle II

Granulierung der in Tab. I aufgeführten Dispersionspolymerisate

| Beisp. Nr. | Polym. Ansatz | Granulierbenzin Gew.-% | Pulveranalyse SSG g/cm³ | Teilchengröße d 50 µ | Rieselfähigk. sec | Schütt-gew. g/l | Kornstab. sec | Spez. Oberfläche m²/g | Formbarkeits-Index |
|---|---|---|---|---|---|---|---|---|---|
| 1 | A | 33 | 2,23 | 270 | 2,5*) | 830 | 4,0 | 9,0 | 7 |
| 2 | B | 33 | 2,15 | 170 | 2,5 | 800 | 4,5 | 6,0 | 8 |
| 3 | C | 33 | 2,149 | 240 | 3,0*) | 785 | 4,0 | 8,0 | 6 |
| 4 | C | 40 | 2,149 | 500 | 2,2 | 860 | 3,0 | nicht best. | 8 |
| 5 | C | 47 | 2,149 | 700 | 2,7 | 840 | 3,0 | nicht best. | 10 |
| 6 | D | 33 | 2,148 | 200 | 2,1*) | 800 | 4,0 | 7,8 | 6 |
| 7 | E | 33 | 2,161 | 255 | 2,1*) | 860 | 4,0 | 8,3 | 5 |
| 8 | E | 47 | 2,161 | 800 | 2,3 | 780 | 2,9 | 8,0 | 10 |
| 9 | F | 47 | 2,19 | 600 | 2,8 | 750 | 3,0 | 7,5 | 8 |
| 10 | G | 40 | 2,195 | 550 | 2,5 | 800 | 2,8 | 7,5 | 7 |

Fortsetzung

| Beisp. Nr. | Polym. Ansatz | Granulierbenzin Gew.-% | Pulveranalyse SSG g/cm³ | Teilchengröße d 50 µ | Rieselfähigk. sec | Schüttgew. g/l | Kornstab. sec | Spez. Oberfläche m²/g | Formbarkeits-Index |
|---|---|---|---|---|---|---|---|---|---|
| 11 | H | 22 | 2,169 | 280 | 2,5*) | 800 | 3,8 | 8,0 | 7 |
| 12 | I | 33 | 2,17 | 200 | 2,5*) | 810 | 4,2 | 11,0 | 6 |
| 13 | J | 33 | 2,150 | 200 | 2,5 | 800 | 4,0 | 9,0 | 7 |

*) Diese Rieselfähigkeitswerte wurden mit einer Produkteinwaage von 25 g, die übrigen mit einer Produkteinwaage von 50 g bestimmt. Letztere Werte würden bei Bestimmung mit einer Produktangabe von 25 g etwa um den Faktor 0,5 niedriger Rieselfähigkeitswerte ergeben.

Die erfindungsgemäße Granulierung zu sinterfähigen füllstoffhaltigen Polymerpulvern wird wie folgt durchgeführt: In ein 30 l-Glasgefäß, das mit einem Rührwerk der Firma Ekato (Typ R 46-000; Durchmesser des Rührorgans = 15 cm) ausgerüstet ist, werden 14,4 kg der in untenstehender Tabelle III angegebenen Polymerdispersion, die einen Feststoffgehalt von 20 Gew.-%, bezogen auf die Dispersion, besitzt, gegeben und durch Zugabe von Wasser auf einen Feststoffgehalt von 12 Gew.-% verdünnt. Nun wird mit einer Umdrehungszahl von 500 UpM und einer Rührenergie von 30 $Js^{-1}l^{-1}$ gerührt und die in untenstehender Tabelle III angegebene Füllstoffmenge (Gew.-%, bezogen auf Polymeres) zugegeben. Anschließend wird die Umdrehungszahl des Rührers auf 700 UpM und die Rührenergie auf 34 $Js^{-1}l^{-1}$ gesteigert und 30 $cm^3$ konzentrierte Salzsäure zugegeben. Nach kurzer Zeit werden deutliche optische Inhomogenitäten in der Dispersion (sogenannte Schlieren) beobachtet, die eine ausreichende Verdikkung anzeigen. Nach weiteren 2 Minuten wird die in Tabelle III angegebene Menge (Gew.-%, bezogen auf Polymeres) Benzin vom Siedepunktsbereich 80 bis 110°C zugegeben und 60 Minuten lang weitergerührt. Danach wird über ein Sieb das gebildete Granulat von der flüssigen Phase getrennt, in 20 l entionisiertem Wasser aufgerührt und dieser Waschvorgang sechsmal wiederholt, dann das füllstoffhaltige Granulat 6 Stunden in einem Umlufttrockenschrank bei 280°C zu einem füllstoffhaltigen, sinterfähigen Polymerpulver getrocknet. An diesem Polymerpulver werden die nachfolgend tabellarisch aufgeführten Werte gemessen:

Tabelle III

Granulierung einiger in Tab. I aufgeführten Dispersionspolymerisate in Gegenwart von Füllstoffen

| Beisp. Nr. | Polym. Ansatz | Granulierbenzin Gew.-% | Füllstoff Art | Füllstoff Gew.-% | Pulveranalyse Teilchengröße d 50 µ | Rieselfähigk. sec | Schüttgewicht g/l | Kornstab. sec | Spez. Oberfläche m²/g |
|---|---|---|---|---|---|---|---|---|---|
| 13 | C | 33 | Glas | 15 | 550 | 2,6 | 713 | 3,1 | 6,7 |
| 14 | B | 33 | Kohle | 25 | 570 | 2,9 | 650 | 2,5 | 5,8 |
| 15 | B | 33 | Graphit | 33 | 600 | 2,8 | 640 | 2,7 | – |
| 16 | B | 33 | Bronze | 60 | 600 | 1,2 | 1350 | 1,2 | 2,1 |

Die gemäß Beispielen 1 bis 9 erhaltenen nicht füllstoffhaltigen, sinterfähigen Polymerpulver werden, wie weiter oben beschrieben, in 1 kg Sinterblöcken, die zu 200 µm starken Folien geschält werden, sowie durch RAM-Extrusion von Vollstäben und Rohren geprüft und dabei die in nachfolgender Tabelle IV und V aufgeführten Meßwerte festgestellt:

Tabelle IV

1 kg Block- und Schälfolienausprüfung

| Granulat aus Beispiel Nr. | Rißbildung ab mm ∅ | 200 μ-Schälfolie | | Elektr. Durchschlagsfestigk. kV/mm | Deformation unter Last % |
|---|---|---|---|---|---|
| | | Rf N/mm² | RD % | | |
| 2 (B) | rißfrei | 28 | 400 | 58 | 13 |
| 3 (C) | rißfrei | 32 | 455 | 62 | 7,8 |
| 4 (C) | rißfrei | 28,1 | 440 | 40 | – |
| 6 (D) | rißfrei | 30,5 | 470 | 61 | 8,0 |
| 7 (E) | rißfrei | 31,1 | 535 | 50 | 8,1 |

Tabelle V

Ram-Extrusion von Vollstäben und Rohren

| Granulat aus Beispiel Nr. | Sinterung | Teilchengr. d 50 µ | Schütt-gewicht g/l | Riesel-fähigk. sec | 22 mm ⌀ Rf N/mm² | Vollstab RD (längs) % | Rohr Rf N/mm² | RD (längs) % | Rf N/mm² | RD (quer) % |
|---|---|---|---|---|---|---|---|---|---|---|
| 1 (A) | Aufheizg. auf 340°C*) | 420 | 1275 | 1,5 | 25 | 390 | 22 | 300 | 21 | 310 |
| 2 (B) | Aufheizg. auf 340°C | 480 | 995 | 1,5 | 24 | 380 | 21 | 320 | 21 | 300 |
| 4 (C) | Aufheizg. auf 340°C | 450 | 1350 | 1,9 | 25 | 390 | 25 | 380 | 19 | 310 |
| 4 (C) | keine | 500 | 860 | 2,9 | 27 | 310 | 27 | 400 | 25 | 310 |
| 6 (D) | keine | 200 | 800 | 2,1 | 25 | 330 | nicht geprüft | | | |
| 8 (E) | keine | 800 | 780 | 2,3 | 29 | 390 | 25 | 410 | 23 | 380 |
| 8 (E) | Aufheizg. auf 340°C*) | 750 | 1300 | 1,5 | | | | | | |

*) Die Granulate gemäß Beispielen Nr. 1, 2, 4 und 8 werden zu einer Schicht mit einer Höhe von 0,5 cm ausgebreitet, vorgesintert durch Aufheizung auf 340°C mit einer Geschwindigkeit von 170°C pro Stunde und Abkühlung auf Zimmertemperatur mit einer Geschwindigkeit von 150°C pro Stunde.

Die gemäß Beispielen 13 bis 16 hergestellten füllstoffhaltigen, sinterfähigen Polymerpulver werden, wie weiter oben beschrieben, ausgeprüft, wobei die in nachfolgender Tabelle VI aufgeführten Werte festgestellt werden.

In den Tabellen IV bis VI bedeuten:

Rf = Reißfestigkeit;
RD = Reißdehnung

Die Prüfrichtung ist in Tabelle V hinter der Reißdehnung in Klammern vermerkt.

Die Buchstaben in Klammern hinter den Beispiel-Nummern weisen auf den verwendeten Polymerisations-Ansatz (siehe Tabelle I) hin.

Tabelle VI

Ausführungsergebnisse der in Gegenwart von Füllstoffen granulierten Dispersionspolymerisate

| Granulat aus Beispiel Nr. | SSG $g/m^2$ | Rf $N/mm^2$ | RD % | Kugeldruckhärte $N/mm^2$ | Deformation unter Last % |
|---|---|---|---|---|---|
| 13 (C) | 2,20 | 18,9 | 378 | 37 | 6,0 |
| 14 (B) | 2,118 | 16,7 | 105 | 41,1 | 5,6 |
| 15 (B) | 2,078 | 16,9 | 70 | 45,5 | 4,1 |
| 16 (B) | 3,909 | 12,6 | 10 | 39 | 4,9 |

**Patentansprüche**

1. Sinterfähiges Polymerpulver, bestehend aus Primärteilchen mit einer mittleren Teilchengröße von 0,05 bis 0,8 μm, die zu einem Granulat mit einem mittleren Korndurchmesser von 150 bis 850 μm agglomeriert sind, wobei das zugrundeliegende Polymere 98,5 bis 100 Gew.-% polymerisierte Tetrafluorethylen-Einheiten und 1,5 bis 0 Gew.-% polymerisierte Einheiten mindestens eines perfluorierten Monomeren, in dem ein Fluor-Atom durch Chlor ersetzt sein kann, und das mit Tetrafluorethylen copolymerisierbar ist, enthält, gekennzeichnet durch eine Kombination folgender Eigenschaften:

spezifische Oberfläche 5 bis 11 $m^2/g$;
standardisiertes spezifisches Gewicht kleiner als 2,2;
Rieselfähigkeit kleiner als 3,1 s/25 g;
Schüttgewicht 750 bis 860 g/l;
Kornstabilität 2,7 bis 5 s/50 g;
Formbarkeitsindex weniger als 11 und
Deformation unter Last weniger als 14%.

2. Füllstoffhaltiges, sinterfähiges Polymerpulver, bestehend aus Primärteilchen mit einer mittleren Teilchengröße von 0,05 bis 0,8 μm, die zu einem Granulat mit einem mittleren Korndurchmesser von 500 bis 700 μm agglomeriert sind, wobei dieser mittlere Korndurchmesser der Agglomerate mindestens 35% größer als der mittlere Durchmesser der Füllstoffteilchen sein soll, zusammengesetzt aus 95 bis 60 Vol.-% eines Polymeren, das 98,5 bis 100 Gew.-%polymerisierte Tetrafluorethylen-Einheiten und 1,5 bis 0 Gew.-% polymerisierte Einheiten mindestens eines Monomeren, in dem ein Fluor-Atom durch Chlor ersetzt sein kann, und das mit Tetrafluorethylen copolymerisierbar ist, enthält, sowie 5 bis 40 Vol.-% eines Füllstoffs, bestehend aus mindestens einem Metall, Metalloxid; -sulfid; -silikat; -sulfat oder aus Kohlenstoff mit einer Teilchengröße, die höchstens 90% der Teilchengröße des sinterfähigen, füllstoffhaltigen Polymerpulvers beträgt, und einem Schmelzpunkt von mindestens 380°C, wobei sich alle Volumenprozent-Angaben auf das füllstoffhaltige Polymerpulver und alle Gewichtsprozent-Angaben auf das Polymerpulver ohne Füllstoff beziehen, gekennzeichnet durch eine Kombination folgender Eigenschaften:

spezifische Oberfläche 1,5 bis 8 $m^2/g$;
Rieselfähigkeit kleiner als 3,1 s/25 g;
Schüttgewicht von 550 bis 1400 g/l;

Kornstabilität 1 bis 3,5 s/50 g;
Deformation unter Last weniger 8% und
Kugeldruckhärte größer als 30 $N/mm^2$.

3. Sinterfähiges Polymerpulver nach Anspruch 1, dadurch gekennzeichnet, daß es ein standardisiertes spezifisches Gewicht von kleiner als 2,17 $g/m^2$ aufweist.

4. Sinterfähiges Polymerpulver nach Anspruch 1, dadurch gekennzeichnet, daß es einen Formbarkeitsindex von weniger als 8 aufweist.

5. Sinterfähiges Polymerpulver nach Anspruch 2, dadurch gekennzeichnet, daß es eine Deformation unter Last von weniger als 6% aufweist.

6. Sinterfähiges Polymerpulver nach Ansprüchen 1 bis 5, dadurch gekennzeichnet, daß der Polymer-Anteil durch Polymerisation in wäßrigem Medium in Gegenwart von 0,01 bis 0,5 Gew.-%, bezogen auf das wäßrige Medium, von mindestens einem telogen-inaktiven fluorierten Dispergiermittel nach der Saattechnik hergestellt wird, wobei 4 bis 12 Gew.-%, bezogen auf das daraus gewonnene Endpolymere, eines Saatpolymerisates eingesetzt werden, das aus 94 bis 99,99 Gew.-% polymerisierten Tetrafluorethylen-Einheiten und aus 6 bis 0,01 Gew.-% polymerisierten Einheiten eines perfluorierten Monomeren, in dem ein Fluor-Atom durch Chlor ersetzt sein kann, besteht, wobei sich die letzten beiden Gewichtsprozent-Angaben auf das Saatpolymerisat beziehen.

7. Sinterfähiges Polymerpulver nach Ansprüchen 1 bis 6, dessen Polymer-Anteil besteht aus 98,5 bis 99,99 Gew.-% polymerisierten Tetrafluorethylen-Einheiten und 1,5 bis 0,01 Gew.-% polymerisierten Einheiten mindestens eines offenkettigen, perfluorierten Monomeren, das eine $CF_2=C<$-Gruppe; 3 bis 6 Kohlenstoff-Atome und 0 bis 2 Sauerstoff-Atome enthält.

8. Sinterfähiges Polymerpulver nach Anspruch 7, dadurch gekennzeichnet, daß das perfluorierte Monomere ein geradkettiger Perfluoralkylvinylether ist.

9. Sinterfähiges Polymerpulver nach Anspruch 7, dadurch gekennzeichnt, daß das perfluorierte Monomere Perfluorpropylen ist.

10. Verfahren zur Herstellung eines sinterfähigen, gegebenenfalls füllstoffhaltigen Polymerpulvers auf Basis eines Polymeren, das besteht aus 98,5 bis 100 Gew.-% polymerisierten Tetrafluorethylen-Einheiten und 1,5 bis 0 Gew.-% polymerisierten Einheiten mindestens eines perfluorierten Monomeren, in dem ein Fluor-Atom durch Chlor ersetzt sein kann, und das mit Tetrafluorethylen copolymerisierbar ist, nach einem der Ansprüche 1 oder 2, wobei das besagte Polymere durch Polymerisation in wäßrigem Medium in Gegenwart von 0,01 bis 0,5 Gew.-%, bezogen auf das wäßrige Medium, von mindestens einem telogen inaktiven, fluorierten Dispergiermittel, unter Bildung einer kolloidalen Dispersion mit einer mittleren Teilchengröße des Polymeren von 0,05 bis 0,8 μm und einem Gesamt-Feststoffgehalt von 10 bis 50 Gew.-%, bezogen auf die Dispersion, gewonnen wurde und wobei die Polymerdispersion auf einen Feststoffgehalt von etwa 5 bis 15 Gew.-% eingestellt und bei 10 bis 85°C mit einer Energie von 4 bis 200 $Js^{-1}l^{-1}$ gerührt und eine organische Flüssigkeit zugegeben wird, wonach gegebenenfalls der Füllstoff zugesetzt und nach Bildung eines Granulates gewaschen, dann von der flüssigen Phase endgültig abgetrennt und getrocknet wird, dadurch gekennzeichnet, daß vor dem Zusatz der organischen Flüssigkeit die Dispersion unter Zugabe von 0 bis 2 Gew.-%, bezogen auf die Dispersion, von mindestens einem wasserlöslichen, dissoziierenden, anorganischen Salz, das ein Ammonium-Kation oder ein Metall-Kation enthält und/oder einer wasserlöslichen Säure, mit der der pH der Dispersion auf 0 bis 6 eingestellt wird, bis zu einer ausreichenden Verdickung der Dispersion, angezeigt durch deutlich sichtbare optische Inhomogenität, gerührt und 0 bis 10 Minuten danach, ohne zwischenzeitliche Abscheidung, Trocknung und Mahlung des Polymeren, 1 bis 5 Gew.-%, bezogen auf die Dispersion, einer organischen Flüssigkeit, die die in Dispersion befindlichen Polymerteilchen gut benetzt und zu weniger als 15 Gew.-% in Wasser bei 20°C löslich ist, zur Dispersion gegeben werden.

11. Verfahren nach Anspruch 10, dadurch gekennzeichnet, daß 0,01 bis 1 Gew.-%, bezogen auf die Dispersion, von einem wasserlöslichen Salz oder einer Säure zugegeben werden.

12. Verfahren nach Ansprüchen 10 und 11, dadurch gekennzeichnet, daß bei einer Temperatur von 15 bis 60°C gearbeitet wird.

13. Verfahren nach Ansprüchen 10 bis 12, dadurch gekennzeichnet, daß die organische Flüssigkeit 0 bis 3 Minuten, insbesondere 0 bis 1 Minute, nach Auftreten der optischen Inhomogenitäten zugegeben wird.

**Claims**

1. Sinterable polymer powder containing primary particles of an average particle size of 0.05 to 0.8 μm being agglomerated to form granules having an average diameter of 150 to 850 μm, said polymer containing 98.5 to 100% by weight of polymerised tetrafluoroethylene units and 1.5 to 0% by weight of polymerised units of at least one perfluorinated monomer in which one fluorine atom can be replaced by chlorine and which is copolymerisable with tetrafluoroethylene said polymer powder is characterised by a combination of the following properties:

specific surface area of 5 to 11 $m^2/g$;
standardised specific gravity of less than 2.2;
flow time of less than 3.1 seconds/25 g;
bulk density of 750 to 860 g/l;
particle stability of 2.7 to 5 seconds/50 g;
moldability index of less than 11 and
deformation under load of less than 14%.

2. Sinterable, filler-containing polymer powder containing primary particles of an average particle size of 0.05 to 0.8 μm being agglomerated to form granules having an average diameter of 500 to 700 μm provided that said average diameter of the granules is at least 35% larger than the average diameter of the filler particles comprising 95 to 60% by volume of a polymer containing 98.5 to 100% by weight of polymerised tetrafluoroethylene units and 1.5 to 0% by weight of polymerised units of at least one monomer in which one fluorine atom can be replaced by chlorine and which is copolymerisable with tetrafluoroethylene, and 5 to 40% by volume of a filler consisting of at least one metal, metal oxide, metal sulfide, metal silicate or metal sulfate or carbon having a maximum particle size which is not more than 90% of the particle size of the sinterable filler-containing polymer powder, and having a melting point of at least 380°C, all the percent by volume figures relating to polymer powder containing filler and all the percent by weight figures relating to the polymer powder without filler said polymer powder is characterised by a combination of the following properties:

specific surface area of 1.5 to 8 $m^2/g$;
flow time of less than 3.1 seconds/25 g;
bulk density of 550 to 1400 g/l;
particle stability of 1 to 3.5 seconds/50 g;
deformation under load of less than 8% and
ball indentation hardness of greater than 30 $N/mm^2$.

3. Sinterable polymer powder as claimed in claim 1, characterised by a standardised specific gravity of less than 2.17 $g/cm^2$.
4. Sinterable polymer powder as claimed in claim 1, characterised by a moldability index of less than 8.
5. Sinterable polymer powder as claimed in claim 2, characterised by a deformation under load of less than 6%.
6. Sinterable polymer powder as claimed in any one of claims 1 to 5, characterised in that the polymer component is prepared following the seed polymerisation technique by polymerisation in an aqueous medium in the presence of 0.01 to 0.5% by weight, relative to the aqueous medium, of at least one fluorinated telogenically-inactive dispersing agent and employing 4 to 12% by weight, relative to the final polymer obtained therefrom, of a seed polymer which consists of 94 to 99.99% by weight of polymerised tetrafluoroethylene units and 6 to 0.01% by weight of polymerised units of a perfluorinated monomer in which one fluorine atom can be replaced by chlorine, the last two percent by weight figures relating to the seed polymer.
7. Sinterable polymer powder as claimed in any one of claims 1 to 6, characterised in that the polymer component of which consists of 98.5 to 99.99% by weight of polymerised tetrafluoroethylen units and 1.5 to 0.01% by weight of polymerised units of at least one perfluorinated monomer which contains a $CF_2=C<$-group; 3 to 6 carbon atoms and 0 to 2 oxygen atoms.
8. Sinterable polymer powder as claimed in claim 7, characterised in that the perfluorinated monomer is a straight-clain perfluoroalkyl vinyl ether.
9. Sinterable polymer powder as claimed in claim 7, characterised in that the perfluorinated monomer ist perfluoropropylene.
10. Process for the manufacture of a sinterable polymer powder which optionally contains a filler as claimed in claims 1 or 2 which is based on a polymer containing 98.5 to 100% by weight of polymerised tetrafluoroethylene units and 1.5 to 0% by weight of polymerised units of at least one perfluorinated monomer in which one fluorine atom can be replaced by chlorine and being copolymerisable with tetrafluoroethylene and which has been obtained by polymerisation in a aqueous medium in the presence of 0.01 to 0.5%by weight, relative to the aqueous medium, of at least one fluorinated telogenically-inactive dispersing agent forming a colloidal dispersion of polymer particles of an average size of 0.05 to 0.8 μm and a total solids content of 10 to 50% by weight, relative to the dispersion, the polymer dispersion then being adjusted to a solids content of about 5 to 15% by weight and being stirred at 10 to 85°C at an energy of 4 to about 200 $J \cdot s^{-1} \cdot l^{-1}$ and an organic liquid being added, after which, if appropriate, the filler is added and, after the formation of granules, being washed, finally separated from the liquid phase and dried, characterised by stirring the dispersion, prior to the addition of the organic liquid, until an adequate degree of thickening of the dispersion is achieved indicated by a distinctly visible optical inhomogeneity while adding 0 to 2% by weight, relative to the dispersion, of at least one watersoluble,

dissociating, inorganic salt which contains an ammonium cation or a metal cation, and/or watersoluble acid by means of which the pH of the dispersion is adjusted to 0 to 6; and adding 0 to 10 minutes later, without intermediately separating, drying and grinding the polymer, 1 to 5% by weight, relative to the dispersion, of an organic liquid which readily wets the polymer particles present in the dispersion and which is soluble to the extent of less than 15% by weight in water at 20°C, to the dispersion.

11. Process as claimed in claim 10, characterised by adding 0.01 to 1% by weight, relative to the dispersion, of a water-soluble salt or an acid.

12. Process as claimed in claims 10 or 11, characterised in that the process is carried out at a temperature of 15 to 60°C.

13. Process as claimed in any one of claims 10 to 12, characterised in that the organic liquid is added 0 to 3 minutes, in particular 0 to 1 minute, after the appearance of the optical inhomogeneities.

## Revendications

1. Poudre de polymère frittable constituée de particules primaires d'une taille de particules moyenne de 0,05 à 0,8 μm, qui sont agglomérées en granulés d'un diamètre de grain moyen de 150 à 850 μm, le polymère de base contenant 98,5 à 100% en poids d'unités tétrafluoréthylène polymérisées et 1,5 à 0% en poids d'unités polymérisées d'au moins un monomère perfluoré dans lequel un atome de fluor peut être remplacé par du chlore, et qui est copolymérisable avec du tétrafluoréthylène, cette poudre étant caractérisée par une combinaison des propriétés suivantes:

surface spécifique 5 à 11 $m^2/g$;
poids spécifique standardisé inférieur à 2,2;
fluidité inférieure à 3,1 sec/25 g;
densité apparente 750 à 860 g/l;
stabilité de grain 2,7 à 5 sec/50 g;
indice d'aptitude au moulage inférieur à 11 et
déformation sous charge inférieure à 14%.

2. Poudre de polymère chargée, frittable, constituée de particules primaires d'une taille de particules moyenne de 0,05 à 0,8 μm, qui sont agglomérées en granulés d'un diamètre de grain moyen de 500 à 700 μm, ce diamètre de grain moyen des agglomérés devant être d'au moins 35% supérieur au diamètre moyen des particules de la charge, composées de 95 à 60% en volume d'un polymère contenant 98,5 à 100% en poids d'unités tétrafluoréthylène polymérisées et 1,5 à 0% en poids d'unités polymérisées d'au moins un monomère dans lequel un atome de fluor peut être remplacé par du chlore, et qui est copolymérisable avec du tétrafluoréthylène, ainsi que de 5 à 40% en volume d'une charge constituée d'au moins un métal, oxyde, sulfure, silicate, sulfate métallique ou de carbone d'une grosseur de particules représentant au maximum 90% de la grosseur des particules de la poudre de polymère chargée frittable, et d'un point de fusion d'au moins 380°C, tout les pourcentages en volume indiquées se rapportant à la poudre de polymère chargée et tous les pourcentages en poids indiqués se rapportant à la poudre de polymère non chargée, cette poudre de polymère étant caractérisée par la combinaison des caractéristiques suivantes:

surface spécifique 1,5 à 8 $m^2/g$;
fluidité inférieure à 3,1 sec/25 g;
densité apparente 550 à 1400 g/l;
stabilité de grain 1 à 3,5 sec/50 g;
déformation sous charge inférieure à 8% et
dureté à la bille supérieure à 30 $N/mm^2$.

3. Poudre de polymère frittable selon la revendication 1, caractérisée par le fait qu'elle présente un poids spécifique standardisé inférieur à 2,17 $g/cm^3$.

4. Poudre de polymère frittable selon la revendication 1, caractérisée par le fait qu'elle présente un indice d'aptitude au moulage inférieur à 8.

5. Poudre de polymère frittable selon la revendication 2, caractérisée par le fait qu'elle présente une déformation sous charge inférieure à 6%.

6. Poudre de polymère frittable selon les revendications 1 à 5, caractérisée par le fait que la proportion de polymère est préparée par polymérisation en milieu aqueux, selon la technique de semence, en présence de 0,01 à 0,5% en poids, rapporté au milieu aqueux, d'au moins un dispersant fluoré télogéniquement inactif, avec utilisation de 4 à 12% en poids, rapporté au polymère final résultant, d'un polymérisat de semence composé de 94 à 99,99% en poids d'unités tétrafluoréthylène et 6 à 0,01% en poids d'unités polymérisées d'un monomère perfluoré dans lequel un atome de fluor peut être remplacé par du chlore, les deux derniers pourcentages en poids se rapportant au polymérisat de semence.

7. Poudre de polymère frittable selon les revendications 1 à 6, dont la proportion de polymère est

composée de 98,5 à 99,99% en poids d'unités tétrafluoréthylène polymérisées et 1,5 à 0,01% en poids d'unités polymérisées d'au moins un monomère perfluoré à chaîne ouverte qui contient un groupe $CF_2=C<$, 3 à 6 atomes de carbone et 0 à 2 atomes d'oxygène.

8. Poudre de polymère frittable selon la revendication 7, caractérisée par le fait que le monomère perfluoré est un éther perfluoralkyl-vinylique à chîne droite.

9. Poudre de polymère frittable selon la revendication 7, caractérisée par le fait que le monomère perfluoré est du perfluoropropylène.

10. Procédé de préparation d'une poudre de polymère frittable, éventuellement chargée, à base d'un polymère composé de 98,5 à 100% en poids d'unités tétrafluoréthylène polymérisées et 1,5 à 0% en poids d'unités polymérisées d'au moins un monomère perfluoré dans lequel un atome de fluor peut être remplacé par du chlore, et qui est copolymérisable avec du tétrafluoréthylène, selon l'une des revendications 1 ou 2, ledit polymère étant préparé par polymérisation en milieu aqueux, en présence de 0,01 à 0,5% en poids, rapporté au milieu aqueux, d'au moins un dispersant fluoré télogéniquement inactif, avec formation d'une dispersion colloïdale d'une grosseur moyenne des particules du polymère de 0,05 à 0,8 $\mu m$ et d'une teneur totale en solides de 10 à 50% en poids, rapporté à la dispersion, la dispersion de polymère étant réglée à une teneur en solides d'environ 5 à 15% en poids et étant brassée entre 10 et 85°C avec une énergie de 4 à 200 $Js^{-1}l^{-1}$, avec addition d'un liquide organique, après quoi on ajoute éventuellement la charge et, après formation des granulés, on lave, on sépare définitivement de la phase liquide et on sèche, ce procédé étant caractérisé par le fait qu'avant l'addition du liquide organique on brasse la dispersion avec addition de 0 à 2% en poids, rapporté à la dispersion, d'au moins un sel inorganique soluble dans l'eau, à effet dissociant, qui contient un cation ammonium ou un cation métallique, et/ou d'un acide soluble dans l'eau avec lequel le pH de la dispersion est réglé à 0—6, jusqu'à épaississement suffisant de la dispersion indiquée par les non-homogénéités optiques nettement perceptibles, et, 0 à 10 minutes après, sans séparation, séchage et broyage du polymère, on ajoute à la dispersion 1 à 5% en poids, rapporté à la dispersion, d'un liquide organique mouillant convenablement les particules de polymère contenues dans la dispersion et qui est soluble à moins de 15% en poids dans l'eau à 20°C.

11. Procédé selon la revendication 10, caractérisé par le fait qu'on ajoute 0,01 à 1% en poids, rapporté à la dispersion, d'un sel soluble dans l'eau ou d'un acide.

12. Procédé selon les revendications 10 et 11, caractérisé par le fait qu'on opère à une température de 15 à 60°C.

13. Procédé selon les revendications 10 à 12, caractérisé par le fait que le liquide organique est ajouté à 0 à 3 minutes après l'apparition des non-homogénéités optiques, en particulier 0 à 1 minutes après.